# EUROPEAN PATENT SPECIFICATION

(11) **EP 1 988 386 B1**
(45) Date of publication and mention of the grant of the patent: **22.07.2015**
(21) Application number: 08155409.9
(22) Date of filing: 29.04.2008
(51) Int. Cl.: G01N 21/90, G06T 7/00

(54) **Machine and method for inspecting glass containers**
Maschine und Verfahren zur Überprüfung von Glasbehältern
Machine et procédé pour inspecter des récipients en verre

(30) Priority: 02.05.2007 US 799616
(43) Date of publication of application: 05.11.2008
(73) Proprietor: Emhart Glass S.A., 6330 Cham (CH); Applied Vision Corporation, Akron, OH 44223 (US)
(72) Inventor: Houck, R. Dean, New York 14801 (US); Sones, Richard A., Ohio 44118 (US); Diehr, Richard D., Horseheads, New York 14845 (US); Novini, Amir R., Akron, Ohio 44333 (US)
(74) Representative: Johnstone, Douglas Ian

(56) References cited:
- EP-A2- 0 483 966
- WO-A1-97/06429
- JP-A- 5 157 707
- US-A- 5 200 801

## Description

The present invention relates to machines, which inspect glass containers for defects, and more particularly, to a system which inspects for checks (cracks) in translucent glass containers.

In the glass container industry, small cracks, or fractures in the glass are referred to as "check defects" or "checks". Checks can range from sub millimeters to several hundred millimeters and can be oriented at any direction from vertical to horizontal. Glass is not a crystalline structure by nature, but most cracks propagate roughly along a plane of some orientation in space mostly determined by the shape of the glass at that location. Most of these crack defects will drastically weaken the container, often causing it to rupture or to leak. Therefore, it is very likely that a container manufacturer will remove a container with a check before it reaches filling plants. Checks appearing near the mouth of the containers are called finish checks. In the glass bottle industry, the term "container finish" refers to the portion of the bottle that defines the mouth, threads or beads, and the ring. The upper surface of the mouth is referred to as the sealing surface.

Another anomaly, which can also be present are bubbles. A bubble results when gas is trapped in the glass. When the bubbles are large they are referred to as a blister and when the bubbles are small, they are referred to as a seed. The presence of bubbles, while affecting the appearance of the bottle, does not necessarily require the rejection of the bottle and an operator may allow such a bottle to be packed. For purposes of this application, the word blister will include a seed.

U.S. Patents Numbers 4,701,612, 4,945,228, 4,958,223, 5,020,908, 5,200,801,5,895,911, 6,104,482, 6,211,952, and 6,275,287, and JP 5,157,707A all relate to devices that detect defects in the finish of a container.

The present invention is directed to a machine for inspecting the finish area of a glass container when rotating at an inspection station and operable to discriminate between an anomaly comprising a check and another type of anomaly, generally of the type disclosed in US 5,200,801, and as defined in the preamble of claim 1, comprising a device operable to rotate a container about its axis, a lighting device for illuminating the finish area of the container when rotating, a camera operable to image the finish area of the container when rotated, and a control which is operable, from the images captured by camera, to discriminate between a check and another type of anomaly.

The apparatus disclosed in JP 5,157,707 A intended to detect a defect such as a crack, dirt, etc. which is parallel to the screw thread in the region of the mouth of a bottle. It does so by determining, from the coordinates of the image of an anomaly, whether an anomaly is continuous (which it judges to be a screw thread), or isolated or independent (which it judges to be a defect).

It is an object of the present invention to provide an apparatus and method for inspecting glass containers, which can differentiate vertical, horizontal, and any other angle cracks (checks) from blisters.

According to one aspect of the present invention, there is provided a machine for inspecting the finish area of a glass container as defined in claim 1.

According to another aspect, there is provided a method of inspecting the finish area of a glass container as defined in claim 3.

The present invention will now be described with reference to some of the accompanying drawings, which illustrate a presently preferred embodiment incorporating the principles of the invention, and in which:
Figure 1 is an oblique elevational schematic view of an inspection station of a machine for inspecting glass containers for anomalies, namely checks and other defects, as disclosed in co-pending EP-A-1, 916, 514 (EP Application No. 07118628.2);
Figure 2 is a schematic top view of the container at the inspection station of Figure 1 showing the light axes of a pair of light sources and the camera;
Figure 3 is a schematic elevational view showing the light axes of the light sources and camera shown in Figure 2;
Figure 4 is a drawing illustrating the structure of a control showing how an unwrapped image is defined;
Figure 5 is a view, taken from the camera, of the finish area of the container shown in Figure 1, illustrating images captured each θ (theta) degrees of rotation of the container about its vertical axis through an angle φ (phi);
Figure 6 is a schematic illustration of the unwrapping process illustrated in Figure 4;
Figure 7 is a presentation of 10 images of an anomaly captured through 11 locations spaced θ (theta) degrees apart through an angle of φ (phi) degrees with the center of the object plotted;
Figure 8 is a presentation similar to that of Figure 7 showing only the objects (images of the anomaly) in Band 1-2;
Figure 9 is a presentation similar to that of Figure 7 showing only the objects in Band 2-3;
Figure 10 is a presentation similar to that of Figure 7 showing only the objects in Band 3-4;
Figure 11 is a drawing showing the structure of the control for determining whether a captured object is a check or a blister; and
Figure 12 is a drawing illustrating the structure of the control for identifying a container for rejection.

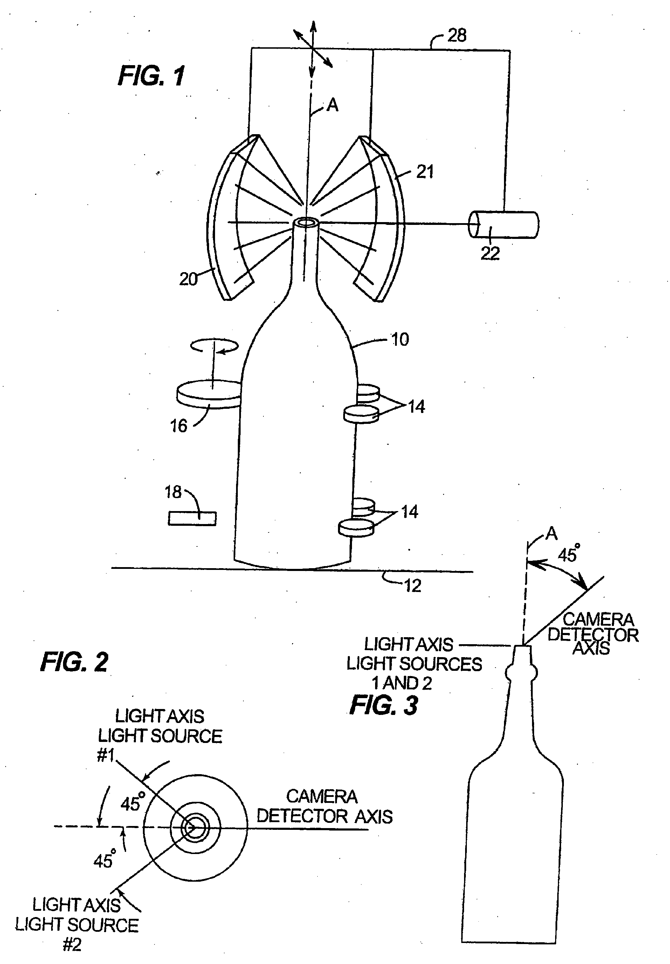

In a machine for inspecting glass containers (e.g. bottles), the containers 10 are transported vertically along a conveyor 12 to an inspection station illustrated in Figure 1. The conveyor may be a linear belt or a turret type feed system. A container 10 is engaged by upper and lower rear pairs of idler rollers 14 and a front drive wheel 16 so that rotation of the drive wheel in the clockwise direction will rotate the container in the counterclockwise direction. There is conveyor dwell of sufficient duration at the inspection station so that the container can be rotated more than 360 degrees while inspection takes place. A container presence sensor 18 will sense the presence of a container at the inspection station. Conical or arcuate light sources (a first light source 20 and a second light source 21) which can be configured from L.E.D.s, for example arranged in rows and columns as described in the above mentioned EP Application No. 07118628.2, illuminate the finish portion of the container and a camera 22 images the finish portion. The camera 22 may be a CCD, CMOS or like camera having a matrix array (X-Y array) of elements (pixels) to receive an image of the finish portion during the camera's exposure period.

As can be seen from Figures 2 and 3, the light axis for each light source is horizontal, and intersects the axis "A" of the container. Each light axis also lies in a vertical plane (not shown) of the container which intersects the axis "A" of the container, and is in front of the container. The two light axes are orthogonal to each other (the light axes are horizontal and 90 degrees related), and 45 degrees to a vertical plane including the camera 22 detector axis. The detector axis for the camera 22, which is located behind the container 10, is approximately 45 degrees from horizontal (the camera bisects the horizontal light axes). The ideal geometry that this configuration attempts to achieve is that of arcuate, conical or part-conical illumination (the light cone being horizontal with its apex, apical region or top of its frustum at the finish) where the camera 22 will not see any light directly from the light sources 20 and 21. With this relationship, the camera 22 is looking at a dark field and is ideally seeing only light coming from checks and blisters. The light sources 20 and 21 and camera 22 are supported by structure 28 that can be vertically displaced and horizontally displaced to reposition the system for different height/diameter containers.

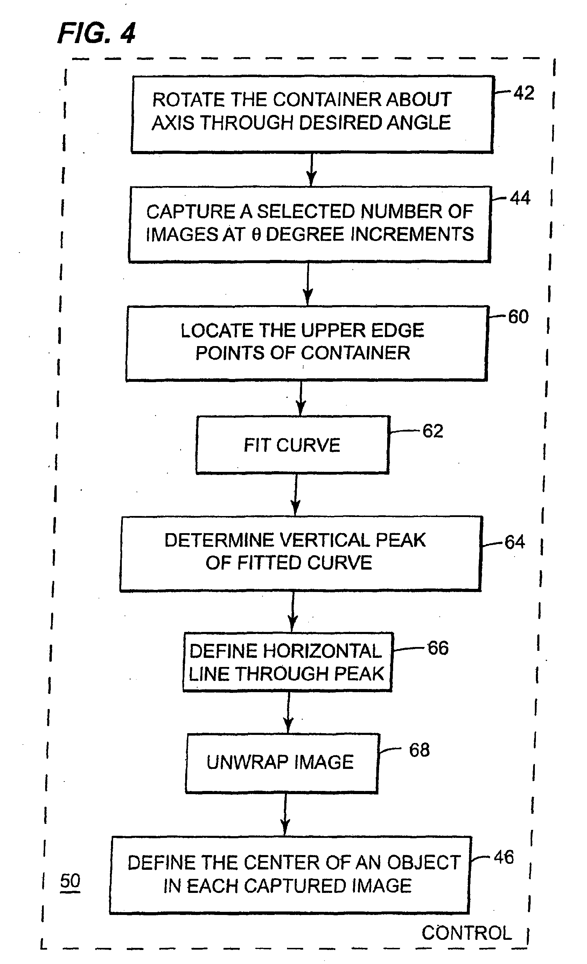

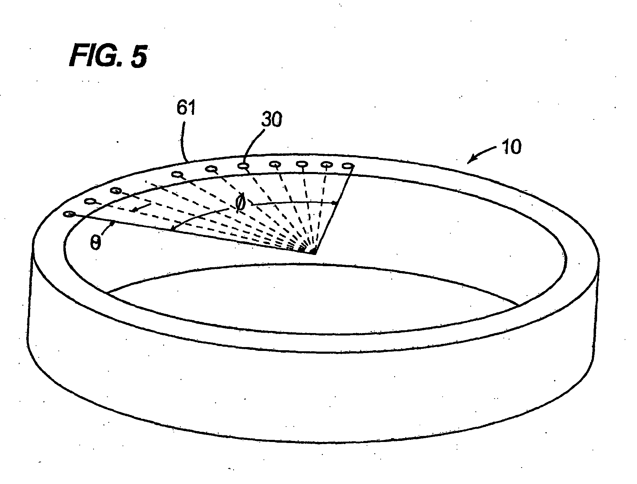

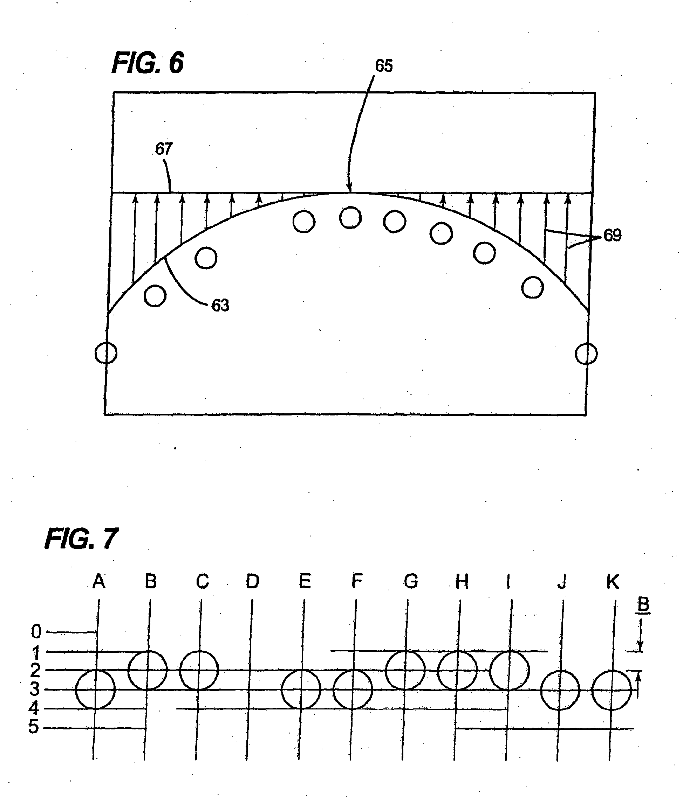

The machine incorporates or is associated with a control 50 (Figures 4, 11 and 12) such as a processor. To start an inspection, the machine will transfer a container 10 to the inspection station and following a time sufficient for the rotation of the container 10 to become stable, the control 50 will begin the inspection. The Control will Rotate The Container About Axis Through Desired Angle 42 (Figure 4). Figure 5 illustrates the appearance of an anomaly 30 (a check or a blister) on or in the finish of the container 10, as it would appear if captured by the camera 22 as the container 10 is rotated through θ (theta) degree increments. The anomaly 30 is represented schematically by circles in Figures 5 to 10, although the actual images captured by the camera 22 preferably will depend upon the particular characteristics and/or location of the anomaly 30, for example will depend upon its outline and/or dimensions and/or area. As illustrated, the container 10 has an anomaly 30 which is captured, i.e. reflects light from the light sources 20 and 21 towards the camera 22, in turn, at ten of the eleven locations spaced θ (theta) degrees. Such could occur by operating the camera 22 every time the container 10 rotates θ (theta) degrees to advance the anomaly 30 to the next location, or alternatively could occur by holding the camera 22 open for a prolonged period while strobing the light sources 20 and 21 at each rotation of θ (theta) degrees. The images of, or containing, the anomaly 30 are shown located within an angle of interest φ (phi) degrees, and defining a partial elliptical path since the camera axis is inclined to the axis of the container 10. The control 50 proceeds to Capture A Selected Number Of Images At θ (theta) Degree Increments 44 triggered by the first anomaly image sensed following entry of the anomaly 30 into the angle of interest, and the control 50 will then Locate The Upper Edge Points Of Container 60. This edge 61 is shown in Figure 5. The control 50 will then Fit Curve 62 to these edge points. This could be done using linear regression techniques. The fit curve 63 is shown in Figure 6. The control 50 then proceeds to Determine Vertical Peak Of Fitted Curve 64. This peak 65 is also shown in Figure 6. The control 50 then proceeds to Define Horizontal Line Through Peak 66 (line 67 in Figure 6) and proceeds to Unwrap Image 68. This procedure is shown in Figure 6 with vertical offsets 69 which are defined by the number of pixels required to shift the fitted curve 63, at each vertical row, vertically to the peak tangent line 67. The control 50 will then Define The Center Of An Anomaly In Each Captured Image 46.

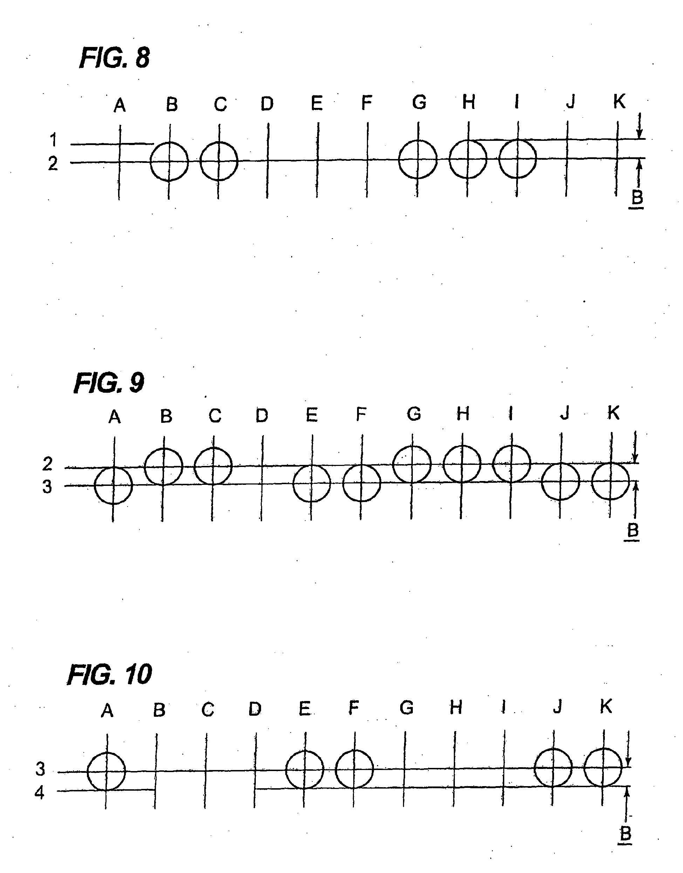

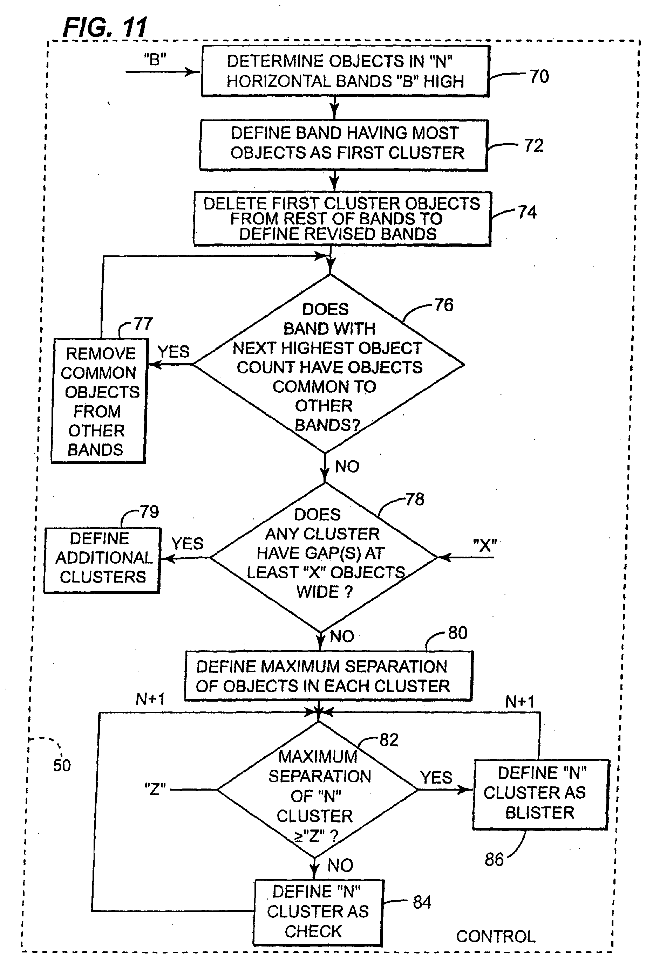

Figure 7 is a schematic presentation of the linear array of the ten images of an anomaly 30 captured as it is successively displaced through the 11 locations spaced θ (theta) degrees apart through the angle φ (phi) degrees to allow the images of the anomaly 30 to be evaluated relative to a straight datum. The centers of the objects, i.e. captured images of the anomaly 30 are plotted showing their "Y" location as a function of three horizontal bands and with their "X" location corresponding to its angular increment. Differences in "Y" location can arise since the objects (i.e. the images of an anomaly 30 at the various angular locations), can appear to the camera 22 to be at different vertical and/or horizontal positions in or on the finish. These differences are usually relatively small in the case of a blister (bubble or seed). However, they may be relatively large in the case of a check (crack or facture) depending upon its direction of propagation, as viewed by the camera 22, or if caused by additional anomalies 30 which may be present in the angle of interest. While the preferred embodiment unwraps the elliptical image to define horizontal bands, the bands could be elliptically matched to the pattern of the captured objects. Figures 8-10 are schematic presentations of the objects sorted into each of the bands (1-2, 2-3, and 3-4) presented in Figure 7. Each band represents a horizontal scan line or lines (a band could, for example be five horizontal scan lines). The width of each band ("B") is shown as settable. Referring to Figure 11, the control 50 will Determine Objects In "N" Horizontal Bands "B" High 70. The objects within a band define a "cluster". The cluster objects identified in Figures 8 through 10 are:
Band 1 (1-2) - objects B, C, G, H, I;
Band 2 (2-3) - objects A, B, C, E, F, G, H, I, J, K;
Band 3 (3-4) - objects A, E, F, J, K;

The control 50 then proceeds to Define Band Having Most Objects As First Cluster 72. In the above illustration, Band 2 has the most objects (10). If two bands have an identical number, the control 50 could pick either one first. The control 50 then proceeds to Remove Common Objects From Other Bands 74. The bands thus become:
Band 2 (2-3) - objects A, B, C, E, F, G, H, I, J, K;

When the control 50 asks the query Does Band With Next Highest Count Of Objects Have Objects Common To Other Bands? 76, the answer will be in the negative - Band 2 has all the unique objects. No further revisions of the bands will take place. The objects in Band 2 will then be identified as a cluster. If a single band contains all of the unique objects, this is indicative of the capture of a single anomaly 30 comprising a blister. If one or more of the other bands contains unique objects, this is indicative of the presence of a check, and/or one or more additional anomalies 30 in the angle of interest since it is unlikely that any additional anomalies 30 would appear to the camera 22 to be in the same orbit or path as the first anomaly 30.

In accordance with an embodiment of the invention, the bandwidth "B" is set at 10 scan lines and all of the ten objects are located within the single band and treated as a single cluster.

The control 50 next asks Does Any Cluster Have Gap(s) at least "X" Objects Wide (X is settable) 78. In the event the query is answered in the affirmative, the control 50 will Define Additional Clusters 79. If "X" was set at three, this query for Band 2, would be answered in the negative since there is a single gap at D one object wide. Had this gap been three objects wide (D,E,&F missing, for example) the control 50 would define the objects to the left of the gap (A,B,&C) as one cluster and the objects to the right of the gap (G-K) as a second cluster. It has been found that blisters generally have very small gaps and that a large gap indicates one or more checks (because of their differing reflection characteristics, more images of a blister than of a check will be captured during rotation of a bottle through the angle of interest). If the operator does not want to use this tool, "X" can be set at 12, for example.

The control 50 will then Define Maximum Separation Of Objects In Each Cluster 80. Cluster 1 has ten spacings separating A from K. The control 50 now determines whether the cluster is a check or a blister. This is done by answering the query "Max Separation of objects in "N" Cluster >= (greater than or equal to) "Z"?" 82. Assuming Z is 8 (a settable input), when this inquiry is answered for Cluster 1 the answer will be yes and the control 50 will Define "N" Cluster As Blister 86. Had the separation been less than 8, the control 50 would Define "N" Cluster As Check 84. This procedure will be repeated for each cluster.

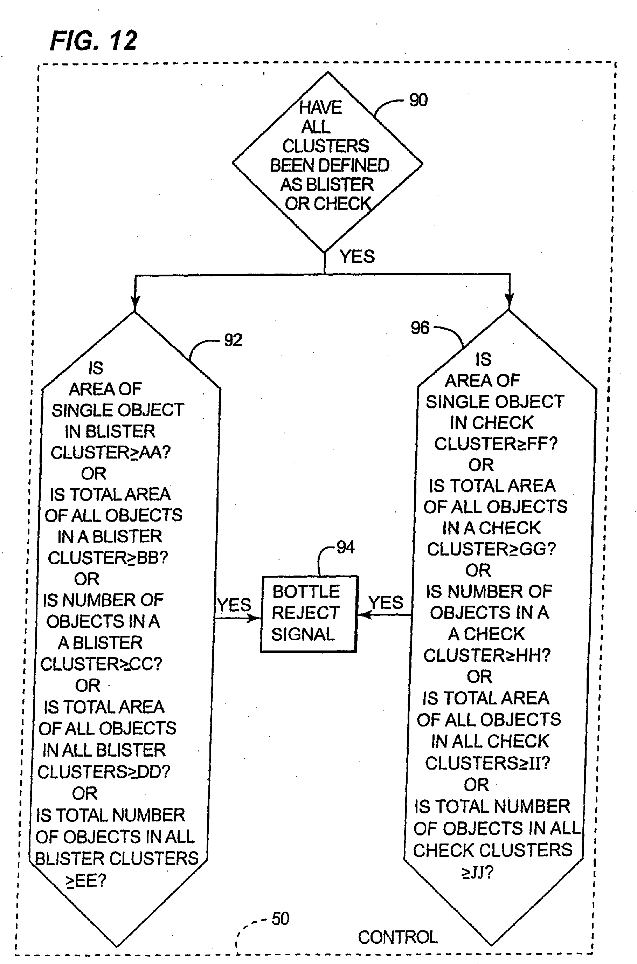

If desired, a decision could be made at this point to pass all blisters and reject all checks but additional choices are provided by the control 50. Figure 12 illustrates the structure of the control 50 for discriminating between a Blister or Check that will not result in a container 10 being rejected and one that will. The control 50 answers the query "Have All Clusters Been Defined As A Blister Or A Check? 90". If the answer is "yes", the control 50 answers the query "Is Area Of Single Object In A Blister Cluster ≥ (greater than or equal to) AA?" Or Is Total Area Of All Objects In A Blister Cluster ≥ (greater than or equal to) BB? Or Is Number Of Objects In A Blister Cluster ≥ (greater than or equal to) CC? or Is Total Area Of All Objects In All Blister Clusters ≥ (greater than or equal to) DD? Or Is Total Number Of Objects In All Blister Clusters ≥ (greater than or equal to) EE? 92. If this query is answered in the affirmative, the control 50 will issue a Bottle Reject Signal 94.

The control 50 will also answer the query "Is Area Of Single Object In Check Cluster ≥ (greater than or equal to) FF?" Or Is Total Area Of All Objects In A Check Cluster ≥ (greater than or equal to) GG? Or Is Number Of Objects In A Check Cluster ≥ (greater than or equal to) HH? or Is Total Area Of All Objects In All Check Clusters ≥ (greater than or equal to) II? Or Is Total Number Of Objects In All Check Clusters ≥ (greater than or equal to) JJ? 96. If this query is answered in the affirmative, the control 50 will also issue a Bottle Reject Signal 94.

Various modifications may be made without departing from the scope of the invention as defined in the appended claims. For example, the light sources 20 and 21 may be configured as arcuate or part-conical panels as shown in Figure 1. Alternatively and preferably they may be generally flat, with the individual LEDs in each matrix oriented, i.e. inclined, so that their optical axes are directed to define the required conical light beam.

## Claims

1. A machine for inspecting the finish area of a glass container when rotating at an inspection station and operable to discriminate between a blister and a check, comprising
a device (16) operable to rotate a container (10) about its axis (A),
a lighting device (20,21) operable to illuminated the finish area of the container when rotating,
a camera (22) operable to image the finish area of the container when rotated, wherein the relationship between the lighting device (20,21) and the camera (22) is such that a dark field will be imaged by the camera when the finish area is illuminated by the lighting device, the imaged dark field including light from a check or a blister if present, and
a control (50),
**characterized in that** said control (50) is configured
to define a cluster comprising a succession of objects (A-K) corresponding to reflections from an anomaly (30) comprising a check or a blister in the images captured by said camera (22) at a predetermined number of angular increments (θ) of rotation,
to determine whether there is at least one gap having a minimum size (X) between adjacent objects in the succession of objects in the cluster,
to define the objects on opposite sides of the or each gap as additional clusters (79), the number of additional clusters being a function of the number of such gaps,
to define a selected separation (Z) of objects,
to define a cluster as a check where the farthest separated objects in a cluster are separated less than the selected separation (Z), and
to define a cluster as a blister where the farthest separated objects are separated by a distance greater than or equal to the selected separation.

2. A machine according to claim 1, wherein the configuration of said control for defining a cluster of objects captured by said camera at successive angular increments (e) comprises means for defining a band including the cluster.

3. A method of inspecting the finish area of a glass container rotated at an inspection station to discriminate between an anomaly comprising a blister and a check, said method comprising:
illuminating the finish area of the glass container (10) as it is being rotated with a lighting device;
imaging the finish area of the rotating container with a camera (22) as the glass container is being rotated, wherein the relationship between the lighting device (20,21) and the camera (22) is such that a dark field will be imaged by the camera when the finish area is illuminated by the lighting device, the imaged dark field including light from a check or blister if present; and
from the images captured by said camera (22), discriminating between a blister and a check by means of a control,
the method being **characterized by**:
defining with said control (50) a cluster comprising a succession of objects (A-K) corresponding to reflections from an anomaly (30) comprising a check or a blister captured by said camera in the images at a predetermined number of angular increments (θ) of rotation;
determining with said control (50) whether there is at least one gap having a minimum size (X) between adjacent objects in the succession of objects in the cluster;
defining with said control (50) the objects in the succession on opposite sides of the or each gap as additional clusters, the number of additional clusters being a function of the number of such gaps;
characterizing with said control (50) a cluster as a check if the farthest separated objects in the cluster are separated less than a selected separation (Z) of objects; and
characterizing with said control (50) a cluster as a blister if the farthest separated objects in the cluster are separated by a distance greater than or equal to said selected separation of (Z) objects.

4. A method as defined in claim 3, additionally comprising:
determining with said control (50) whether the area of a single object in the cluster characterized as a blister exceeds or is equal to a predetermined area; and
generating with said control a reject signal in the event the area of said single object in the cluster characterized as a blister exceeds or is equal to a predetermined area.

5. A method as defined in claim 3, additionally comprising:
determining with said control (50) the total area of all objects in the cluster characterized as a blister; and
generating with said control (50) a reject signal in the event the total area in the cluster characterized as a blister exceeds or is equal to a predetermined area.

6. A method as defined in claim 3, additionally comprising:
determining with said control (50) the number of objects in the cluster characterized as a blister; and
generating with said control (50) a reject signal in the event that the number of objects in the cluster characterized as a blister exceeds or is equal to a predetermined number.

7. A method as defined in claim 3, additionally comprising:
determining with said control (50) the area of the largest object in the cluster characterized as a check; and
generating with said control (50) a reject signal in the event the largest object area in the cluster characterized as a check exceeds or is equal to a predetermined area.

8. A method as defined in claim 3, additionally comprising:
determining with said control (50) the total area of all objects in the cluster characterized as a check; and
generating with said control (50) a reject signal in the event the total area in the cluster characterized as a check exceeds or is equal to a predetermined area.

9. A method as defined in claim 3, additionally comprising:
determining with said control (50) the number of objects in the cluster characterized as a check; and
generating with said control (50) a reject signal in the event that the number of objects in the cluster characterized as a check exceeds or is equal to a predetermined number.

## Patentansprüche

1. Maschine zum Prüfen des Halsbereichs eines in einer Prüfstation drehenden Glasbehälters, die zwischen einer Blase und einem Riss unterscheiden kann, welche Maschine aufweist:
eine Vorrichtung (16), mit der ein Behälter (10) um eine Achse (A) drehbar ist,
eine Beleuchtungsvorrichtung (20, 21), mit der der Halsbereich des drehenden Behälters beleuchtbar ist,
eine Kamera (22), mittels der der Halsbereich des drehenden Behälters abbildbar ist, wobei die Beleuchtungsvorrichtung (20, 21) der Kamera (22) so zugeordnet ist, dass die Kamera ein Dunkelfeld abbildet, wenn die Beleuchtungsvorrichtung den Halsbereich beleuchtet, wobei das abgebildete Dunkelfeld Licht aus einem Riss oder einer Blase beinhaltet, der bzw. die ggf. vorhanden ist, und
eine Steuerung (50);
**dadurch gekennzeichnet, dass** die Steuerung (50) ausgeführt ist,
einen Cluster zu definieren, der eine Folge von Objekten (A-K) entsprechend Reflexionen aus einer Anomalie (30) beinhaltet, die jeweils einem Riss oder einer Blase in den von der Kamera (22) in einer vorbestimmten Anzahl von Winkelschritten (Θ) der Drehung aufgenommenen Bildern entsprechen,
zu ermitteln, ob zwischen aufeinander folgenden Objekten in der Objektfolge im Cluster mindestens eine Lücke einer Mindestgröße (X) vorliegt,
die Objekte auf gegenüberliegenden Seiten der einen bzw. mehrerer Lücken als zusätzliche Cluster (79) zu definieren, wobei die Anzahl der zusätzlichen Cluster eine Funktion der Anzahl solcher Lücken ist,
einen gewählten Abstand (Z) der Objekte zu definieren,
einen Cluster als Riss zu definieren, wo der Abstand der am weitesten getrennten Objekte in einem Cluster geringer als der gewählten Abstand (Z) ist, und
einen Cluster als Blase zu definieren, wo der Abstand der am weitesten getrennten Objekte gleich dem oder größer ist als der gewählte Abstand.

2. Maschine nach Anspruch 1, bei der die Ausführung der Steuerung zum Definieren eines Clusters von Objekten, die die Kamera in aufeinander folgenden Winkelschritten (Θ) aufnimmt, eine Einrichtung aufweist, mit der ein den Cluster enthaltendes Band definierbar ist.

3. Verfahren zum Prüfen des Halsbereichs eines in einer Prüfstation drehenden Behälters zwecks Unterscheidung zwischen einer Anomalie mit einer Blase und einem Riss, das folgende Schritte aufweist:
Beleuchten des Halsbereichs des Glasbehälters (10), der gedreht wird, mittels einer Beleuchtungsvorrichtung;
Abbilden des Halsbereichs des drehenden Behälters mit einer Kamera (22), während der Glasbehälter gedreht wird, wobei die Beleuchtungsvorrichtung (20, 21) der Kamera (22) so zugeordnet ist, dass die Kamera ein Dunkelfeld abbildet, wenn die Beleuchtungsvorrichtung den Halsbereich beleuchtet, wobei das abgebildete Dunkelfeld Licht aus einem Riss oder einer Blase beinhaltet, der bzw. die ggf. vorliegt; und
Unterscheiden mittels einer Steuerung zwischen einer Blase und einem Riss in den von der Kamera (22) aufgenommenen Abbildern;
**dadurch gekennzeichnet, dass**
mittels der Steuerung (50) ein Cluster definiert wird, der einer Folge von Objekten (A-K) entsprechend Reflexionen aus einer Anomalie (30) enthält, die jeweils einem Riss oder einer Blase in den in einer vorbestimmten Anzahl von Winkelschritten (Θ) der Drehung von der Kamera aufgenommenen Bildern entspricht;
mittels der Steuerung (50) ermittelt wird, ob zwischen aufeinander folgenden Objekten in der Objektfolge im Cluster mindestens eine Lücke einer Mindestgröße (X) vorliegt;
mittels der Steuerung (50) die Objekte auf gegenüber liegenden Seiten der bzw. jeder Lücke als zusätzliche Cluster definiert werden, wobei die Anzahl der zusätzlichen Cluster eine Funktion der Anzahl solcher Lücken ist;
mittels der Steuerung (50) ein Cluster als Riss typisiert wird, wenn die am weitesten getrennten Objekte im Cluster um weniger als einen gewählten Abstand (Z) der Objekte beabstandet sind; und
mittels der Steuerung (50) ein Cluster als Blase typisiert wird, wenn die am weitesten getrennten Objekte im Cluster um mehr als den oder gleich dem gewählten Abstand (Z) der Objekte beabstandet sind.

4. Verfahren nach Anspruch 3, bei dem zusätzlich:
mittels der Steuerung (50) ermittelt wird, ob der Flächeninhalt eines einzelnen Objekts im als Blase typisierten Cluster gleich einem vorbestimmten Flächeninhalt ist oder letzteren übersteigt; und
mittels der Steuerung ein Auswurfsignal erzeugt wird, falls der Flächeninhalt des einzelnen Objekts im als Blase typisierten Cluster gleich einem vorbestimmten Flächeninhalt ist oder letzteren übersteigt.

5. Verfahren nach Anspruch 3, bei dem zusätzlich:
mittels der Steuerung (50) der Gesamt-Flächeninhalt aller Objekte im als Blase typisierten Cluster ermittelt wird; und
mittels der Steuerung (50) ein Auswurfsignal erzeugt wird, falls die Anzahl der Objekte im als Blase typisierten Cluster gleich einer vorbestimmten Anzahl ist oder letztere übersteigt.

6. Verfahren nach Anspruch 3, bei dem zusätzlich:
mittels der Steuerung (50) die Anzahl von Objekten in dem als Blase typisierten Cluster ermittelt wird; und
mittels der Steuerung (50) ein Auswurfsignal erzeugt wird, falls die Anzahl von Objekten im dem als Blase typisierten Cluster gleich einer vorbestimmten Anzahl ist oder letztere übersteigt.

7. Verfahren nach Anspruch 3, bei dem zusätzlich:
mittels der Steuerung (50) der Flächeninhalt des größten Objekts im als Riss typisierten Objekt ermittelt wird; und
mittels der Steuerung (50) ein Auswurfsignal erzeugt wird, falls das Objekt mit dem größten Flächeninhalt im als Riss typisierten Cluster gleich einem vorbestimmten Flächeninhalt oder größer als letztere ist.

8. Verfahren nach Anspruch 3, bei dem zusätzlich:
mittels der Steuerung (50) der Gesamt-Flächeninhalt aller Objekte im als Riss typisierten Cluster ermittel wird; und
mittels der Steuerung (50) ein Auswurfsignal erzeugt wird, falls der Gesamt-Flächeninhalt im als Riss typisierten Cluster gleich einem vorbestimmten Flächeninhalt ist oder letzteren übersteigt.

9. Verfahren nach Anspruch 3, bei dem zusätzlich:
mittels der Steuerung (50) die Anzahl von Objekten im als Riss typisierten Cluster ermittelt wird; und
mittels der Steuerung (50) ein Auswurfsignal erzeugt wird, falls die Anzahl von Objekten im als Riss typisierten Cluster gleich einer vorbestimmten Anzahl ist oder letztere übersteigt.

## Revendications

1. Machine pour inspecter la surface de finition d'un contenant en verre lors de sa rotation au niveau d'un poste d'inspection et pouvant être utilisée pour faire une discrimination entre une bulle et une petite fissure, comprenant
un dispositif (16) pouvant être utilisé pour faire tourner un contenant (10) autour de son axe (A),
un dispositif d'éclairage (20, 21) pouvant être utilisé pour éclairer la surface de finition du contenant lors de sa rotation,
une caméra (22) pouvant être utilisée pour former l'image de la surface de finition du contenant lors de sa rotation, dans laquelle la relation entre le dispositif d'éclairage (20, 21) et la caméra (22) est telle que l'image d'un champ foncé sera formée par la caméra lorsque la surface de finition est éclairée par le dispositif d'éclairage, le champ foncé dont l'image est formée comprenant une lumière provenant d'une petite fissure ou d'une bulle le cas échéant, et
une commande (50),
**caractérisée en ce que** ladite commande (50) est configurée
pour définir un groupe comprenant une succession d'objets (A à K) correspondant à des réflexions par une anomalie (30) comprenant une petite fissure ou une bulle dans les images capturées par ladite caméra (22) à un nombre prédéterminé d'incréments angulaires (θ) de rotation,
pour déterminer s'il existe au moins un espace ayant une taille minimum (X) entre des objets adjacents dans la succession d'objets dans le groupe,
pour définir les objets sur les côtés opposés de l'espace ou de chaque espace en tant que groupes supplémentaires (79), le nombre de groupes supplémentaires étant fonction du nombre de ces espaces,
pour définir une séparation sélectionnée (Z) des objets,
pour définir un groupe en tant que petite fissure où les objets séparés les plus éloignés dans un groupe sont séparés d'une distance inférieure à la séparation sélectionnée (Z), et
pour définir un groupe en tant que bulle lorsque les objets séparés les plus éloignés sont séparés d'une distance supérieure ou égale à la séparation sélectionnée.

2. Machine selon la revendication 1, dans laquelle la configuration de ladite commande pour définir un groupe d'objets capturés par ladite caméra à des incréments angulaires (θ) successifs comprend des moyens pour définir une bande comprenant le groupe.

3. Procédé d'inspection de la surface de finition d'un contenant en verre mis en rotation au niveau d'un poste d'inspection pour faire une discrimination entre des anomalies comprenant une bulle et une petite fissure, ledit procédé comprenant :
l'éclairage de la surface de finition du contenant en verre (10) alors qu'il est mis en rotation par un dispositif d'éclairage ;
la formation de l'image de la surface de finition du contenant en rotation par une caméra (22) alors que le contenant en verre est mis en rotation ; dans lequel la relation entre le dispositif d'éclairage (20, 21) et la caméra (22) est telle que l'image d'un champ foncé sera formée par la caméra lorsque la surface de finition est éclairée par le dispositif d'éclairage, le champ foncé dont l'image est formée comprenant une lumière provenant d'une petite fissure ou d'une bulle le cas échéant ; et
à partir des images capturées par ladite caméra (22), la discrimination entre une bulle et une petite fissure au moyen d'une commande,
le procédé étant **caractérisé en ce qu'**il comprend :
la définition, par ladite commande (50), d'un groupe comprenant une succession d'objets (A à K) correspondant à des réflexions par une anomalie (30) comprenant une petite fissure ou une bulle capturée par ladite caméra dans les images à un nombre prédéterminé d'incréments angulaires (θ) de rotation ;
la détermination, par ladite commande (50), s'il existe au moins un espace ayant une taille minimum (X) entre des objets adjacents dans la succession d'objets dans le groupe ;
la définition, par ladite commande (50), des objets dans la succession sur les côtés opposés de l'espace ou de chaque espace en tant que groupes supplémentaires, le nombre de groupes supplémentaires étant fonction du nombre de ces espaces ;
la caractérisation, par ladite commande (50), d'un groupe en tant que petite fissure si les objets séparés les plus éloignés dans le groupe sont séparés d'une distance inférieure à une séparation sélectionnée (Z) des objets ; et
la caractérisation, par ladite commande (50), d'un groupe en tant que bulle si les objets séparés les plus éloignés dans la groupe sont séparés d'une distance supérieure ou égale à ladite séparation sélectionnée (Z) des objets.

4. Procédé selon la revendication 3, comprenant en plus :
la détermination, par ladite commande (50), si l'aire d'un objet unique dans le groupe caractérisé en tant que bulle dépasse ou est égale à une aire prédéterminée ; et
la génération, par ladite commande, d'un signal de rejet dans le cas où l'aire dudit objet unique dans le groupe caractérisé en tant que bulle dépasse ou est égale à une aire prédéterminée.

5. Procédé selon la revendication 3, comprenant en plus :
la détermination, par ladite commande (50), de l'aire totale de tous les objets dans le groupe caractérisé en tant que bulle ; et
la génération, par ladite commande (50), d'un signal de rejet dans le cas où l'aire totale dans le groupe caractérisé en tant que bulle dépasse ou est égale à une aire prédéterminée.

6. Procédé selon la revendication 3, comprenant en plus :
la détermination, par ladite commande (50), du nombre d'objets dans le groupe caractérisé en tant que bulle ; et
la génération, par ladite commande (50), d'un signal de rejet dans le cas où le nombre d'objets dans le groupe caractérisé en tant que bulle dépasse ou est égal à un nombre prédéterminé.

7. Procédé selon la revendication 3, comprenant en plus :
la détermination, par ladite commande (50), de l'aire de l'objet le plus grand dans le groupe caractérisé en tant que petite fissure ; et
la génération, par ladite commande (50), d'un signal de rejet dans le cas où l'aire de l'objet le plus grand dans le groupe caractérisé en tant que petite fissure dépasse ou est égale à une aire prédéterminée.

8. Procédé selon la revendication 3, comprenant en plus :
la détermination, par ladite commande (50), de l'aire totale de tous les objets dans le groupe caractérisé en tant que petite fissure ; et
la génération, par ladite commande (50), d'un signal de rejet dans le cas où l'aire totale dans le groupe caractérisé en tant que petite fissure dépasse ou est égale à une aire prédéterminée.

9. Procédé selon la revendication 3, comprenant en plus :
la détermination, par ladite commande (50), du nombre d'objets dans le groupe caractérisé en tant que petite fissure ; et
la génération, par ladite commande (50), d'un signal de rejet dans le cas où le nombre d'objets dans le groupe caractérisé en tant que petite fissure dépasse ou est égal à un nombre prédéterminé.
